# EUROPÄISCHE PATENTSCHRIFT

(11) **EP 1 921 108 B1**
(45) Veröffentlichungstag und Bekanntmachung des Hinweises auf die Patenterteilung: **18.08.2010**
(21) Anmeldenummer: 07021712.0
(22) Anmeldetag: 08.11.2007
(51) Int. Cl.: C08K 9/10, C08F 6/28, C08F 6/00

(54) **Verfahren zur Minderung von Schadstoffermissionen und/oder geruchsemittierenden Substanzen in polymeren Wekstoffen**
Method for reducing pollutant emissions and/or odorous substances in polymer materials
Procédé de réduction d'émissions de matières polluantes et/ou de substances odorantes dans des matières premières polymères

(30) Priorität: 11.11.2006 DE 102006053258
(43) Veröffentlichungstag der Anmeldung: 14.05.2008
(73) Patentinhaber: Schrader, Helmut G., 64291 Darmstadt (DE)
(72) Erfinder: Schrader, Helmut G., 64291 Darmstadt (DE)
(74) Vertreter: Katscher Habermann Patentanwälte

(56) Entgegenhaltungen:
- EP-A- 1 541 594
- WO-A-2004/069913
- DE-A1- 1 946 163
- DE-A1- 10 120 480

## Beschreibung

### Technisches Gebiet:

Die vorliegende Erfindung betrifft ein Verfahren zur Minderung von Schadstoff-Emissionen und/oder geruchsemittierenden Substanzen in polymeren Werkstoffen. An polymere Werkstoffe, vornehmlich Thermoplaste, Duroplaste, Elastomere, Kleber und Beschichtungen sowie Composites und Regenerate werden immer höhere QualitätsAnforderungen hinsichtlich der Einhaltung der Minimal-Grenzwerte für Schadstoff-Emissionen und Fogging sowie geruchsemittierenden Substanzen gestellt. Insbesondere werden diese Grenzwerte für Kunststoffe in der Anwendung zur Lebensmittelverpackung, der Medizintechnik, der allgemeinen Technik und in der Transport- und FahrzeugTechnik (Wasser, Luft, Schiene und Straße), hier insbesondere im Interieur-Bereich gefordert.

### Stand der Technik:

Bekannt ist, Wasser, Kohlendioxid oder Stickstoff als Schlepp- und Treibmittel zur Minderung des Restmonomergehaltes und damit die Reduzierung flüchtig organischer Verbindungen und geruchsemittierender Substanzen in der Verarbeitung von polymeren Werkstoffen einzusetzen. Derartige Verfahren wurden in der Forschungsarbeit/Dissertation "Entgasen von Polymeren" im November 2002 an der Universität Hannover untersucht.

DE 103 35 486 B4 beschreibt ein Verfahren zur Minderung von Schadstoffen und/oder geruchsemittierenden Substanzen in polymeren Werkstoffen. Hierbei wird ein Additiv basierend auf ein Trägermaterial aus Zeolith oder Kieselsäure mit einer Wasserbeladung zur homogenen Einarbeitung in die Polymerschmelze entwickelt.

Physikalisch gebundene Flüssigkeiten auf mikro- oder nanoskaliertem Trägermaterial, d.h. pulverisiert, trennen sich leicht von dem Trägermaterial vor der homogenen Einarbeitung in der bis zu 350 °C heißen polymeren Werkstoffschmelze und liefern dann kaum einen Beitrag zur Entgasungsverbesserung. Weiterhin führen die hohen Verarbeitungs-Temperaturen zum Aufheizen der Metall-Prozesseinrichtungen, wie Zylinder, Schnecken und Transport- sowie Mischwellen, und führen ebenfalls zu der vorbeschriebenen Verarbeitungs-Behinderung. Eine Beladung der Trägerstoffe ist nur mit polaren Flüssigkeiten möglich und schränkt den Anwendungsbereich stark ein.

Um während der Verarbeitung Füllstoffe und Verstärkungs-Materialien der Werkstoffschmelze zuzugeben, sind am Extruder auf der Länge bis zur Vakuumentgasungs-Zone Entlüfter angeordnet, die ein vorzeitiges Abdampfen der Schleppmittel-Wirkstoffflüssigkeit bewirken und die Entgasungsleistung mindern. Weiterhin sind physikalisch zu Pulver gebundene Flüssigkeiten sehr anfällig bei Druck durch Förderschnecken. Ein großes Problem stellt auch die unzuverlässige Reproduzierbarkeit bei der Dosiermengenbestimmung dieser Schleppmitteladditive dar, da sie durch eine große Oberflächenverteilung bei offenen Lager- bzw. Verarbeitungssystemen zur Verdunstung neigen.

Aus EP 1 541 594 A1 ist ein Verfahren zur Verringerung des Restmonomergehalts von Polymerdispersionen in Polyesterpolyolen bekannt, bei welchem Wasser als Schleppmittel zur an sich fertigen Dispersion zugesetzt und anschließen im Vakuum wieder entfernt wird. Da das Wasser bei vorgegebenen Temperatur- und Druckverhältnissen über längere Zeiträume im Bereich von Stunden zugeführt und anschließend wieder entzogen werden muss, führt dies zu einer Verzögerung und erheblichen Mehrkosten bei der Herstellung der Polymerdispersion.

Die bei diesem Stand der Technik bekannten und beschriebenen Verfahren weisen einige Nachteile auf. Dies gilt insbesondere für die Additivierungs-Reproduzierbarkeit von Entgasungsverfahren und der damit verbundenen Sicherungsforderung der Qualitäts-Verbesserung von polymeren Werkstoffen.

Aufgabe der Erfindung ist es daher, ein Verfahren zu entwickeln, das sich reproduzierbar, unkompliziert und kostengünstig in vorhandene und neue Extrusions-, Misch- und Fertigungsprozesse integrieren und anwenden lässt.

### Darstellung der Erfindung:

Diese Aufgabe wurde durch ein Verfahren mit den Merkmalen des Anspruchs 1 gelöst. Eine prozesssichere, reproduzierbare und kostengünstige Eindosierung des Schleppmittelwirkstoffes "Wasser" wird durch den Einsatz als Kapsel - im Folgenden auch Additiv-Depot-Kapsel genannt - erreicht. Die Kapsel gewährleistet eine homogene Einarbeitung in der Werkstoff-Polymermatrix bei flexibler und gezielter Einstellung der Kapselwand-Auflösung durch Druck bzw. Wärme und Freisetzung der Schleppmittelflüssigkeit in der gewünschten Vakuumentgasungszone und führt hier unter Vakuumdruck durch Blasenverdampfung zum Abzug bzw. Minderung von Schadstoffen und/oder geruchsemittierenden Substanzen im Polymer-Werkstoff.

Die Additiv-Depot-Kapsel besteht im Kern aus bis zu 95 Gewichts-Prozent Flüssigkeit und hat eine feste Kapsel-Hülle aus bis zu 5 Gewichts-Prozent Wandmaterial, bestehend aus synthetischen oder natürlichen Stoffen, kompatibel zum Polymer-Werkstoff.

Die Kapselgröße bzw. der Durchmesser der Additiv-Depot-Kapsel kann je nach den Erfordernissen zwischen 20 und 50000 µm betragen.

Die Additiv-Depot-Kapseln werden je nach dem Grad der Werkstoff-Verunreinigung bzw. Bedarf mit 0,2 bis 30 Gewichts-Prozent in die Polymer-Werkstoffmischung eindosiert. Die Depot-Kapsel kann sowohl mit einer Monokernstruktur mit einem Einzelwirkstoff, dem Schleppmittel, als auch mit Kombiwirkstoffen beladen sein. Auch kann die Kapsel mit einer Polykernstruktur hergestellt werden. Hierbei werden die Monokernstruktur-Kapseln mehrfach zu einer Verbund-Polykernstruktur-Kapsel gebündelt und kapseliert. Über unterschiedliche Materialien der Kapselhülle lassen sich in Verbindung mit Druck oder Wärme genau definierte Zeiträume bzw. Positionen für die gewünschte Freisetzung des im Kapselkern befindlichen Wirkstoffes einstellen. Die erreichten Vorteile sind in der großen, möglichen Vielzahl an Lösungsvariationen von der Schleppmittel-Flüssigwirkstoff-Monokapsel bis hin zur Multifunktions- oder Schleppmittel-/Funktionswirkstoffkombinations-Kapsel zu sehen. Neben der Basiskapselfüllung Wasser als Schleppmittelwirkstoff zum Abdampfen und Entgasen von Schadstoffen und/oder geruchsemittierenden Substanzen kann die Kapselfüllung auch Funktionswirkstoffe mit polarer oder unpolarer Stoffstruktur, wie z.B.

Stabilisatoren, Antioxidantien, Neutralisations- und Nukleierungs-Mittel, Farbpigmente, Duftstoffe, Bakterizide, Fungizide, und Pestizide beinhalten. Während die flüssigen Inhaltsstoffe der Depot-Kapsel bei Unterdruck in der Entgasungsphase unter Blasen- und Schaumbildung zur gewünschten Entgasung beitragen, verbleiben die Funktionswirkstoffe in der Werkstoffmatrix und üben eine qualitätsverbessernde Dauerwirkung aus.

Das erfindungsgemäße Verfahren zeichnet sich gegenüber bisher bekannten Entgasungsverfahren durch eine deutlich verbesserte Handhabung aus.

Die Additiv-Depot-Kapsel lässt sich durch die feste Kapselwand-Umhüllung ohne Schleppmittelverlust zeitunabhängig lagern, auf weiten Strecken transportieren und mittels volumetrischen und gravimetrischen Dosiersystemen exakt mittels Druck oder drucklos in die Polymermatrix einarbeiten. Die feste Kapselwand-Umhüllung verhindert im Verarbeitungsprozess eine vorzeitige ungewollte Verflüchtigung bzw. Abspaltung der Schleppmittelflüssigkeit durch Kontaktieren mit heißen Anlagenteilen, wie Zylinder, Schnecken und Mischwellen.

Das erfindungsgemäße Verfahren ermöglicht erstmals die Zugabe der Additiv-Depot-Kapsel mittels Druck oder drucklos sowohl über die Material-Aufgabestation als auch mittels Druck oder drucklos über eine oder mehrere Seitenbeschickungen. Dies ermöglicht den Einsatz von Entgasungshilfsmitteln in der Additiv-Depot-Kapsel bei der Entgasung von empfindlichen Naturfaser- bzw. Holzfaserverstärkten Kunststoffen.

Weiterhin ermöglicht das erfindungsgemäße Verfahren mittels des Einsatzes der Additiv-Depot-Kapsel die exakte Wirkstoffbestimmung bzw. Menge und den Zeitpunkt der Freisetzung, womit auch das Problem der handzuhabenden Reproduzierbarkeit gelöst wurde.

### Kurze Beschreibung der Zeichnung

Ausführungsbeispiele der Erfindung sind in den Zeichnungen dargestellt und nachfolgend erläutert. Es zeigt:
- Fig. 1: Querschnitte verschiedener Kapseln,
- Fig. 2: einen Extruder und
- Fig. 3: zwei Mischer.

### Beschreibung der Ausführungsbeispiele

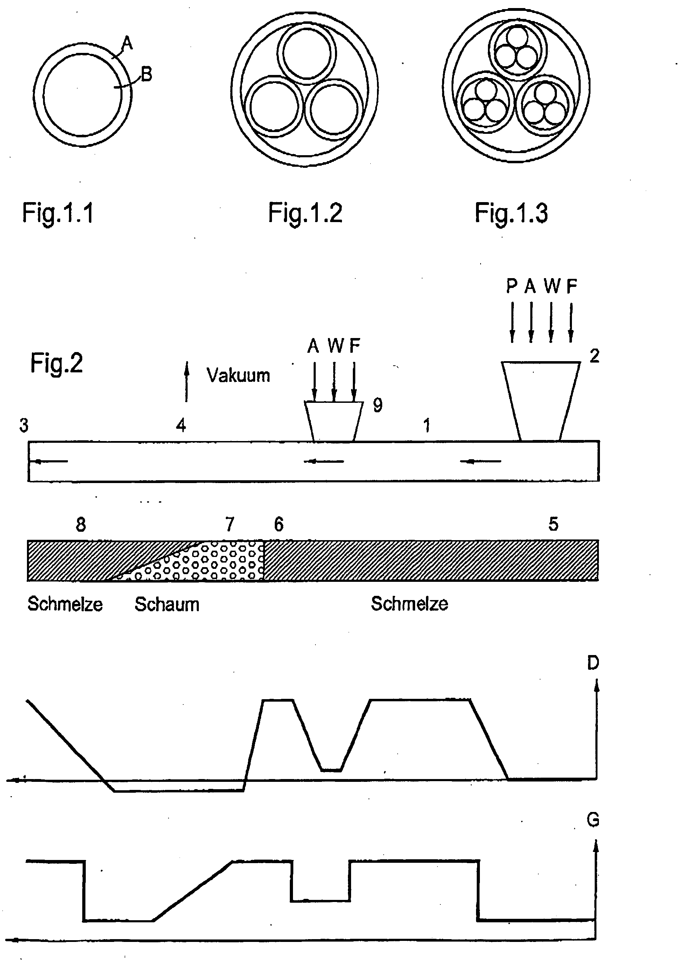

Schematisch wird in Fig. 1 die Additiv-Depot-Kapsel dargestellt. Fig. 1,1 zeigt die Monokapsel mit einer durch Wärme oder Druck sich auflösender Kapsel-Hülle (A), die mit einem Schleppmittel (B) bzw. kombiniert mit einem Funktions-Wirkstoff (B) gefüllt ist.
Fig. 1.2 zeigt eine Additiv-Depot-Kapsel als Polykapsel bestehend aus gebündelten vorbeschriebenen Monokapseln.
Fig. 1.3 zeigt eine Additiv-Depot-Kapsel als Multikapsel bestehend aus gebündelten vorbeschriebenen Polykapseln.
Dem in Fig. 2 schematisch dargestellten Extruder 1 mit einer durch einen nach links weisenden Pfeil gekennzeichneten Förderrichtung werden bei dem Material-Aufgabetrichter 2 bzw. bei der Einzugszone die polymeren Grundsubstanzen, Polymer (P), Additiv-Depot-Kapsel (A), Füllstoff (F) und gegebenenfalls weitere Wirkstoffe (W) zugeführt. Die zugeführten Substanzen werden in einem Bereich 5 des Extruders 1 eingezogen, vermischt und aufgeschmolzen, wobei die Hülle der Additiv-Depot-Kapsel (A) mittels Druck oder Wärme aufgelöst und das freiwerdende Schleppmittel homogen in die Polymermatrix eingemischt wird. Die Zuführung der Additiv-Depot-Kapseln (A) kann ebenfalls oder zusätzlich über eine Seiten-Beschickung 9 unter Druck oder drucklos der Polymerschmelze zugegeben werden.

Dieser Misch- und Aufschmelzprozess wird in einem Bereich 6 mit erhöhtem Druck (D) fortgesetzt.

In dem mittels Vakuum 4 erzeugten Unterdruckbereich der Entgasungszone 7 verdampft das Schleppmittel bei Blasen- und Schaumbildung bei abgemindertem Füllgrad (G) und entgast/reinigt unter Mitnahme der flüchtigen Schadstoffe und geruchsemittierenden Substanzen den polymeren werkstoff. Der fertige und gereinigte polymere Werkstoff wird an der Düse 3 zur weiteren Verarbeitung entgegengenommen.

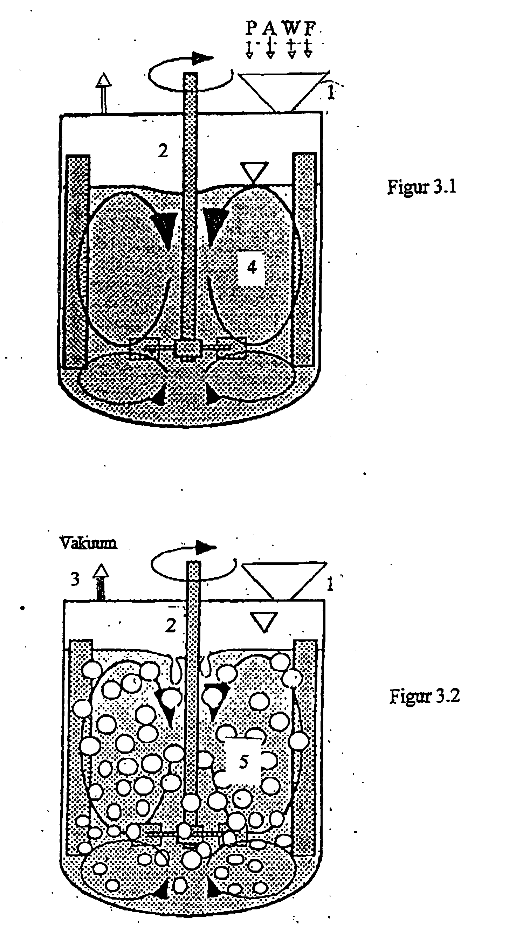

Fig. 3.1 zeigt einen statischen bzw. dynamischen Mischer. Über einen Aufgabetrichter 1 werden die polymeren Grundsubstanzen, Polymer P, Additiv-Depot-Kapseln (A), Füllstoff (F) und gegebenenfalls weitere Wirkstoffe (W) dem Rührbehälter 2 zugeführt. Die Substanzen werden vermischt und aufgeschmolzen, wobei sich die Depot-Kapsel-Umhüllung mittels Druck oder Wärme auflöst und das freiwerdende Schleppmittel sich homogen in der Polymerschmelze 4 verteilt.

Dem in Fig. 3.2 dargestellten Mischer wird nach dem vorbeschriebenen Mischvorgang mittels Vakuum 3 im Rührbehälter 2 ein Unterdruck erzeugt. Es setzt schlagartig die Verdampfung des Schleppmittels unter Blasenbildung ein. Aus der schaumförmigen Matrixschmelze 5 werden die flüchtigen Schadstoffe und/oder geruchsemittierenden Substanzen abgezogen. Nach der Entgasung wird der gereinigte polymere Werkstoff zur weiteren Verarbeitung entnommen.

## Patentansprüche

1. Verfahren zur Minderung von Schadstoffemissionen und/oder geruchsemittierenden Substanzen in polymeren Werkstoffen, wobei ein Schleppmittel durch Druck, bzw. Wärme in der Werkstoffschmelze freigesetzt wird und unter Vakuum-Unterdruck mit Blasen- und Schaumbildung unter Mitnahme von flüchtigen Schadstoffen und/oder geruchsemittierenden Substanzen abdampft, **dadurch gekennzeichnet, dass** das Schleppmittel enthaltende Kapseln in die polymeren Werkstoffe eingearbeitet werden.

2. Verfahren nach Anspruch 1, **dadurch gekennzeichnet, dass** die Kapseln mit 0,2 bis 30 Gewichts-Prozent in polymere Werkstoffe eingebracht werden.

3. Verfahren nach Anspruch 1 oder 2, **dadurch gekennzeichnet, dass** die Kapseln aus einer festen Kapsel-Hülle bestehen und mit einem Schleppmittel von bis zu 95 Gewichts-Prozent gefüllt sind.

4. Verfahren nach einem der vorausgehenden Ansprüche, **dadurch gekennzeichnet, dass** die Kapsel-Hülle aus bis zu 5 Gewichts-Prozent Wandmaterial aus synthetischen oder natürliche Stoffen, jeweils kompatibel zum Polymer-Werkstoff, besteht.

5. Verfahren nach einem der vorangehenden Ansprüche, **dadurch gekennzeichnet, dass** die Kapsel einen Durchmesser von 20 bis 50000 µm aufweist.

6. Verfahren nach einem der vorangehenden Ansprüche, **dadurch gekennzeichnet, dass** die Füllung der Depot-Kapsel neben dem Schleppmittel auch aus Funktionswirkstoffen, oder aus Kombinationen von beiden besteht.

7. Verfahren nach einem der vorangehenden Ansprüche, **dadurch gekennzeichnet, dass** die Kapsel mit Polystruktur-Kapseln gefüllt ist, wobei mehrere Kapseln mit gleichem oder verschiedenem Inhalt zu einem Verbund gebündelt kapseliert sind.

## Claims

1. Method for reducing levels of pollutant emissions and/or of odorous substances in polymeric materials, where a means of entrainment is liberated via pressure and/or heat within the molten material and vaporizes in vacuo, with formation of bubbles and foam and with entrainment of volatile pollutants and/or of odorous substances, **characterized in that** capsules comprising the means of entrainment are incorporated into the polymeric materials.

2. Method according to Claim 1, **characterized in that** the amount of the capsules introduced into polymeric materials is from 0.2 to 30 per cent by weight.

3. Method according to Claim 1 or 2, **characterized in that** the capsules consist of a solid capsule shell and have been filled to an extent of up to 95 per cent by weight with a means of entrainment.

4. Method according to any of the preceding claims, **characterized in that** up to 5 per cent by weight of the capsule shell wall material consists of made synthetic or natural substances, in each case compatible with the polymer material.

5. Method according to any of the preceding claims, **characterized in that** the diameter of the capsule is from 20 to 50 000 µm.

6. Method according to any of the preceding claims, **characterized in that** the filling of the delayed-release capsules consists not only of the means of entrainment but also of active functional ingredients, or consists of a combination of the two.

7. Method according to any of the preceding claims, **characterized in that** the capsule has been filled with polystructure capsules, where a plurality of capsules with identical or different content have been encapsulated after assembly to give a composite.

## Revendications

1. Procédé de réduction de l'émission de polluants et/ou de substances émettant des odeurs dans des matériaux polymères, un agent d'entraînement étant libéré par pression ou chaleur dans la masse fondue du matériau et s'évaporant sous sous-pression/vide en formant des bulles et de la mousse et en entraînant des polluants et/ou substances émettant des odeurs volatils, **caractérisé en ce que** des capsules contenant l'agent d'entraînement sont incorporées dans les matériaux polymères.

2. Procédé selon la revendication 1, **caractérisé en ce que** les capsules sont incorporées dans les matériaux polymères à hauteur de 0,2 à 30 pourcent en poids.

3. Procédé selon la revendication 1 ou 2, **caractérisé en ce que** les capsules sont constituées d'une enveloppe de capsule solide et sont remplies avec un agent d'entraînement jusqu'à 95 pourcent en poids.

4. Procédé selon l'une quelconque des revendications précédentes, **caractérisé en ce que** l'enveloppe de capsule est constituée de jusqu'à 5 pourcent en poids d'un matériau de paroi à base de substances synthétiques ou naturelles, à chaque fois compatibles avec le matériau polymère.

5. Procédé selon l'une quelconque des revendications précédentes, **caractérisé en ce que** la capsule présente un diamètre de 20 à 50 000 µm.

6. Procédé selon l'une quelconque des revendications précédentes, **caractérisé en ce que** le remplissage des capsules retard est constitué, outre l'agent d'entraînement, également d'agents actifs fonctionnels, ou de combinaisons des deux.

7. Procédé selon l'une quelconque des revendications précédentes, **caractérisé en ce que** la capsule est remplie avec des capsules présentant une polystructure, plusieurs capsules d'un contenu identique ou différent étant encapsulées ensemble pour former un composite.
